Europäisches Patentamt

European Patent Office

Office européen des brevets

(11) Veröffentlichungsnummer: **0 533 261 A2**

## (12) EUROPÄISCHE PATENTANMELDUNG

(21) Anmeldenummer: **92202784.2**

(22) Anmeldetag: **11.09.92**

(51) Int. Cl.⁵: **G10L 5/06**

(30) Priorität: **14.09.91 DE 4130632**

(43) Veröffentlichungstag der Anmeldung:
**24.03.93 Patentblatt 93/12**

(84) Benannte Vertragsstaaten:
**DE FR GB**

(71) Anmelder: **Philips Patentverwaltung GmbH**
**Wendenstrasse 35 Postfach 10 51 49**
**W-2000 Hamburg 1(DE)**
(84) **DE**

(71) Anmelder: **N.V. Philips' Gloeilampenfabrieken**
**Groenewoudseweg 1**
**NL-5621 BA Eindhoven(NL)**

(84) **FR GB**

(72) Erfinder: **Ney, Hermann, Dr., c/o Philips**
**Patentv.GmbH**
**Wendenstrasse 35**
**W-2000 Hamburg 1(DE)**
Erfinder: **Steinbiss, Volker, Dr., c/o Philips**
**Patentv.GmbH**
**Wendenstrasse 35**
**W-2000 Hamburg 1(DE)**

(74) Vertreter: **Poddig, Dieter, Dipl.-Ing. et al**
**Philips Patentverwaltung GmbH**
**Wendenstrasse 35 Postfach 10 51 49**
**W-2000 Hamburg 1 (DE)**

(54) Verfahren und Anordnung zum Erkennen gesprochener Wörter in einem Sprachsignal.

(57) Bei der Erkennung zusammenhängend gesprochener Sprache werden zur Erhöhung der Erkennungssicherheit zweckmäßig Sprachmodelle verwendet, die beispielsweise die Wahrscheinlichkeiten von Wortkombinationen, insbesondere von Wortpaaren, berücksichtigen. Dazu wird an Wortgrenzen ein Sprachmodellwert entsprechend dieser Wahrscheinlichkeit hinzugefügt. Bei manchen Erkennungsverfahren, beispielsweise wenn das Vokabular in Form eines Baumes aus Phonemen aufgebaut ist, ist am Anfang der Fortsetzung einer Hypothese nach einem Wortende nicht bekannt, welches Wort tatsächlich folgt, so daß ein Sprachmodellwert erst am Ende des folgenden Wortes berücksichtigt werden kann. Es werden Maßnahmen angegeben, wie dies so durchgeführt werden kann, daß möglichst das optimale Vorgängerwort bzw. die optimale Vorgängerwortfolge für den Sprachmodellwert berücksichtigt wird, ohne daß für jede gleichzeitig endende Vorgänger-Wortfolge eine Kopie des Suchbaumes angelegt werden muß.

FIG.2

Rank Xerox (UK) Business Services
(3.10/3.5x/3.0.1)

Die Erfindung betrifft ein Verfahren zum Erkennen einer Folge von Wörtern in einem Sprachsignal mit folgenden Schritten:

- Zu wiederholten Zeitpunkten wird das Sprachsignal abgetastet, um eine Folge von Testsignalen zu erzeugen, und es wird ein signalweiser Vergleich mit Bewertung zwischen den Testsignalen und verschiedenen Folgen von Referenzsignalen durchgeführt, die zu einem Satz von Folgen von Referenzsignalen gehören, wobei jede Folge von Referenzsignalen ein Wort des Vokabulars darstellt;
- zu einem bestimmten ersten Testsignal wird jeder ersten Folge von vorläufig erkannten Wörtern, die bei diesem ersten Testsignal endet, ein erster Bewertungswert zugeordnet.

Die DE-PS 32 15 868 beschreibt ein Verfahren zur Spracherkennung unter Verwendung der dynamischen Programmierung, um zur Anpassung eine Zeitverzerrung zwischen der Folge der Testsignale und der Folge von Referenzsignalen durchzuführen. Darüber hinaus wird eine gewisse Optimierung zum Bestimmen von Wortübergänge angewendet. Dabei wird jedesmal dann, wenn ein Wortende erreicht wird, die Suche in dem gesamten Vokabular fortgesetzt. Dies führt bei einem größeren Vokabular von beispielsweise über 10.000 Wörtern zu einem sehr großen Suchraum, der viel Rechenzeit erfordert, so daß die Erkennung viel Zeit benötigt.

Ein verbessertes Verfahren ist aus der DE-OS 37 10 507 bekannt. Dabei wird durch regelmäßige Vergleiche aller Hypothesen mit einem Schwellwert der Suchraum klein gehalten. Durch Verwendung eines Sprachmodells, bei dem syntaktische Zusammenhänge, beispielsweise in Form von statistischen Wahrscheinlichkeiten berücksichtigt werden, wird die Zuverlässigkeit der Erkennung erhöht. Dabei wird am Ende jeweils eines Wortes zu den erneut in die Vergleiche aufgenommenen Wörter ein Sprachmodellwert addiert, der von der Kombination des jeweils neu begonnen Wortes und des Vorgängerworts bei einem Bigramm-Sprachmodell oder der n-1 Vorgängerwörter bei einem n-Gram-Sprachmodell abhängt. Dafür ist es notwendig, daß die Identität des jeweils neu in den Vergleich aufgenommenen Worts bekannt ist.

Diese letztere Voraussetzung ist jedoch bei manchen Erkennungsverfahren nicht gegeben. Insbesondere ist dies der Fall bei einem Erkennungsverfahren, bei dem das Vokabular in Form einer Baumliste aus beispielsweise Phonemen aufgebaut ist, wie dies in der prioritätsgleichen Patentanmeldung P 41 30 631.7 (PHD 91-138) beschrieben ist. Bei diesem Verfahren können viele Wörter mit demselben Phonem beginnen. Daher liegen bei diesem Verfahren die Anfänge der Wörter nicht mehr getrennt vor, und es kann ohne weiteres kein Sprachmodell mehr verwendet werden, bei dem die Wahrscheinlichkeit eines Wortes vom vorhergehenden Wort oder Teilsatz abhängt. Wenn beispielsweise ein Bigram-Sprachmodell verwendet werden soll, müßten im Suchraum vom Vokabular bzw. dessen Anfang immer wieder Kopien angelegt werden, die die vom Sprachmodell modellierten Kontexte vor dem betrachteten Wort, d.h. z.B. das Vorgängerwort oder eine dem Vorgängerwort zugeordnete Kategorie, repräsentieren. Dies würde den potentiellen Suchaufwand erheblich erhöhen.

Es ist unter anderem eine Aufgabe der Erfindung, die Verwendung eines Sprachmodells beim Verfahren der eingangs genannten Art auf einfache Weise zu ermöglichen.

Diese Aufgabe wird erfindungsgemäß dadurch gelöst, daß

- von einem bestimmten zweiten Testsignal an, das dem ersten Testsignal folgt, der signalweise Vergleich mit Bewertung für geeignete weitere Folgen von Referenzsignalen aus dem oben genannten Satz fortgesetzt wird, bis das Ende eines folgenden Wortes bei einem weiteren ersten Testsignal erreicht ist, wobei jede solche folgende Folge, die dieses folgende Wort darstellt, einen Teilbewertungswert erzeugt;
- für jede solche folgende Folge ein n-Gram Sprachmodellwert ($n{\geq}2$) zugeführt wird, der durch die kombinierten Wortidentitäten des folgenden Wortes und von (n-1) letzten Wörtern des Vokabulars aus der Folge der vorläufig erkannten Wörter, die bei dem ersten Testsignal enden, bestimmt ist;
- der erste Bewertungswert, der Teilbewertungswert und der Sprachmodellwert addiert werden, um einen weiteren ersten Bewertungswert zu erzeugen, wobei ein Hinweis auf diesen weiteren ersten Bewertungswert, ein Hinweis auf das folgende Wort und ein Hinweis auf das genannte erste Testsignal in einem Bereich einer Ergebnisliste gespeichert wird, der diesem weiteren ersten Testsignal zugeordnet ist;
- die minimalen gleichzeitig vorhandenen ersten Bewertungswerte ausgewählt werden, um damit zugeordnete Wortfolgen vorläufig zu erkennen, wobei die anderen Folgen beendet werden;
- die erkannte Folge von Wörtern dargestellt wird durch eine nicht beendete erste Folge mit einem zugeordneten minimalen Wert unter den verschiedenen ersten Bewertungswerten in der Ergebnisliste.

Bei einer Erkennung mit einem großen Vokabular geschieht es oft, daß jedes oder fast jedes Testsignal den Endpunkt von einem oder mehreren Wörtern darstellt. Zu einem solchen Zeitpunkt wird daher nicht nur der beste Bewertungswert erhalten, sondern es werden alle Wörter mit den zugehörigen Angaben gespeichert. Für jedes dieser gleichzeitig abgespeicherten Wörter ist dann jeweils wenigstens das optimale Vorgängerwort berücksichtigt, und wenn das folgende Wort wieder endet, werden für die Ermittlung des dazu optimalen Vorgängerwortes die entsprechend optimierten Werte verwendet, d.h. bei jedem endenden Wort wird ermittelt, welcher Bewertungswert sich am Ende dieses Wortes ergeben hätte, wenn dieses Wort von den verschiedenen Vorgangerworten ausgegangen wäre, wobei jeweils der richtige Sprachmodellwert berücksichtigt wird. Dies gilt auch, wenn innerhalb eines Wortes zwei oder mehr Hypothesen rekombinieren, die zu verschiedenen Zeitpunkten, d.h. bei verschiedenen Testsignalen begonnen haben können, so daß dadurch ein gewisser Fehler bezüglich der optimalen Wortgrenze entsteht, jedoch haben Untersuchungen ergeben, daß sich dieser Fehler im Mittel auf das gesamte Erkennungsergebnis praktisch nicht auswirkt.

Da nun mit jedem Testsignal die Angaben für die Enden mehrerer Wörter gespeichert werden, ist es notwendig, alle diese Angaben bei späteren Wortenden zu erfassen, unabhängig davon, wie der Zeiger als Hinweis auf den Anfang des später endenden Wortes gebildet ist. Hierfür ist es nach einer Ausgestaltung der Erfindung zweckmäßig, daß eine Angabe jedes Bereichs der Ergebnisliste in einer gesonderten Listenposition einer Hilfsliste für jedes Testsignal gespeichert wird. Eine solche Hilfsliste erfordert nur einen geringen Speicherbedarf und enthält an jedem Listenplatz beispielsweise einen Hinweis auf den ersten und den letzten Listenplatz des betreffenden Bereichs der Ergebnisliste.

Eine solche Hilfsliste ist zweckmäßig, jedoch nicht unbedingt notwendig, um die Hinweise auf die einzelnen Wortenden zu erhalten, wenn sie benötigt werden, um die weiteren ersten Bewertungswerte zu bestimmen. Eine Anzahl Möglichkeiten, um diese Hinweise auf einfache und schnelle Weise mit oder ohne die Hilfsliste zu erhalten, sind in den Unteransprüchen angegeben.

Die Erfindung bezieht sich auch auf eine Anordnung für Spracherkennung, die gemäß den vorstehenden Verfahrensschritten arbeitet.

Diese und weitere Aspekte der Erfindung werden nachstehend anhand der Zeichnung näher erläutert. Es zeigen:

Fig. 1 symbolisch mehrere endende Folgen und deren Abspeicherung,

Fig. 2 etwas ausführlicher die Vorgänge beim Erreichen von Wortenden für die Ermittlung der neu abzuspeichernden Information,

Fig. 3 die Verwendung einer Hilfsliste.

Fig. 4 ein einfaches Blockschaltbild einer Anordnung zur Spracherkennung.

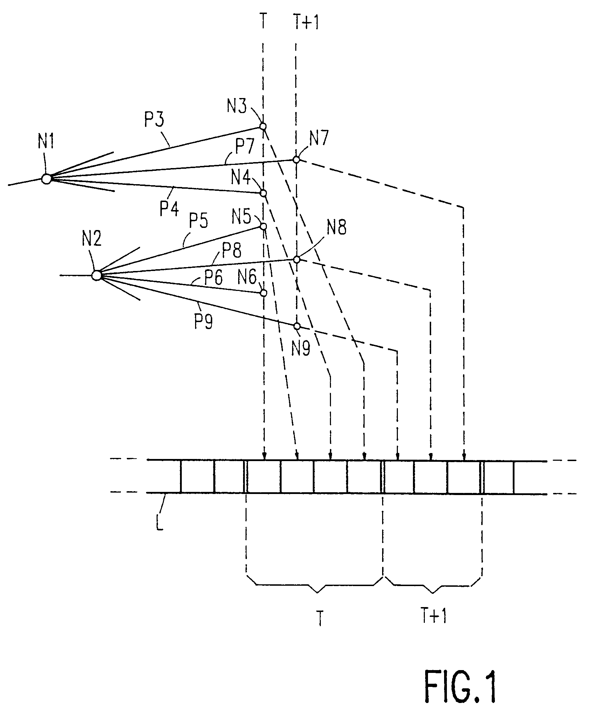

In Fig. 1 ist symbolisch der Verlauf einiger vorläufiger Hypothesen angedeutet, die zu verschiedenen Zeitpunkten, d.h. mit verschiedenen Testsignalen beginnen. Eine erste Gruppe von Hypothesen beginnt beim Knoten N1 zu einem Zeitpunkt unmittelbar nachdem eine Anzahl Wörter geendet haben, was hier nicht näher angegeben ist. Der von links auf den Knoten N1 zulaufende Strich soll den vorhergehenden Teil der Hypothesen andeuten.

Mit dem Knoten N2 beginnt bei einem späteren Zeitpunkt, beispielsweise bei dem Testsignal, das auf das Testsignal des Knotens N1 folgt, eine weitere Anzahl von Teilhypothesen.

Jede Teilhypothese stellt die Vergleiche aufeinanderfolgender Testsignale mit Referenzsignalen jeweils einer Folge von Referenzsignalen dar, wobei jedes Wort durch eine getrennte Folge von Referenzsignalen dargestellt ist, wie dies in der eingangs genannten DE-OS 32 15 868 beschrieben ist. Nach einer anderen Möglichkeit besteht die Teilhypothese aus einer Kette von Phonemen mit je einer Folge von Referenzwerten, wie dies in der eingangs genannten prioritätsgleichen Patentanmeldung P 41 30 631.7 (PHD 91-138) mit dem als Baum aus Phonemen dargestellten Vokabular angegeben ist.

Von dem Knoten N1 in Fig. 1 starten zwei mit P3 bzw. P4 bezeichnete Teilhypothesen, die zum Zeitpunkt T jeweils ein Wortende erreichen, das hier mit N3 bzw. N4 angegeben ist. Eine weitere Teilhypothese P7 endet beim nächsten Zeitpunkt T + 1 im Knoten N7. Weitere vom Knoten N7 ausgehende Teilhypothesen sind angedeutet, deren Enden nicht dargestellt sind.

Die vom Knoten N2 ausgehenden Teilhypothesen P5 und P6 enden zum Zeitpunkt T in den Knoten N5 und N6. Entsprechend enden die Teilhypothesen P8 und P9 zum Zeitpunkt T + 1 in den Knoten N8 und N9.

Es ist dabei auch möglich, daß von dem Knoten N1 und N2 ausgehende Teilhypothesen übereinstimmende Folgen von Referenzwerten haben, die lediglich zeitlich verschoben sind. Solche Hypothesen können innerhalb der Folge oder auch am Ende zusammenlaufen. Zu solchen Zeitpunkten wird dann die Teilhypothese mit der kleineren Unterschiedssumme weitergeführt.

Zu jedem endenden Wort werden nun in einer Ergebnisliste L, die hier schematisch als eine Kette von Feldern dargestellt ist, Angaben gespeichert. Jedes Feld der Liste L stellt einen Listenplatz dar, dem eine Speicheradresse zugeordnet ist. Die Angaben der Wörter, die zu einem bestimmten Zeitpunkt enden, werden in einem zusammenhängenden Bereich der Liste L gespeichert. So werden die Wörter N3 bis N6, die zum Zeitpunkt T enden, im Bereich "T" der Ergebnisliste L gespeichert. Ebenso werden die Angaben für die zum Zeitpunkt T + 1 endenden Wörter entsprechend den Knoten N7 bis N9 in einem folgenden, entsprechend bezeichneten Bereich "T + 1" gespeichert.

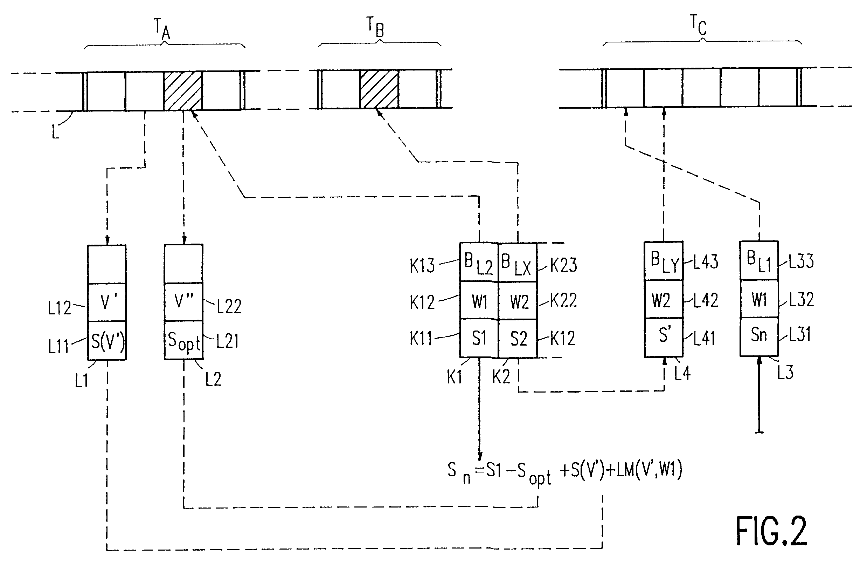

Diese Angaben dienen letztlich dazu, ausgehend von dem am Ende des gesamten Sprachsignals endenden Wort mit dem besten Bewertungswert die diesem vorhergehende Wortkette zurückverfolgen zu können, um die erkannten Wörter auszugeben. Die Bildung der dafür notwendigen Angaben unter Verwendung eines Bigramm-Sprachmodells als Beispiel wird nachfolgend näher anhand der Fig. 2 erläutert.

Darin ist wieder die Ergebnisliste L als eine Kette von Feldern angedeutet, wobei jeder Bereich $T_A$, $T_B$ und $T_C$ jeweils zusammenhängend ist und Angaben von entsprechenden Wörtern enthält, die jeweils zum selben Zeitpunkt, d.h. mit dem selben Testsignal, geendet haben. Der Bereich $T_A$ umfaßt vier Felder, d.h. zu diesem Zeitpunkt $T_A$ haben vier Wörter geendet. Das schraffierte Feld sei dem Wort zugeordnet, das von allen gleichzeitig endenden Wörtern den geringsten Bewertungswert hatte. Mit diesem Bewertungswert werden nun neue Teilhypothesen fortgesetzt, wie dies in Fig. 1 ausgehend vom Knoten N1 angedeutet ist.

Entsprechend umfaßt der Bereich $T_B$ drei Felder, d.h. zum Zeitpunkt $T_B$ haben drei Wörter geendet, und auch hier enthält das schraffierte Feld das Wort mit dem kleinsten Bewertungswert, mit dem von diesem Zeitpunkt, genauer von dem unmittelbar folgenden Zeitpunkt ausgehend neue Teilhypothesen gestartet werden, wie dies in Fig. 1 ausgehend von dem Knoten N2 angedeutet ist.

Es wird nun angenommen, daß zum Zeitpunkt $T_C$ Wortenden erreicht werden, von denen ein erstes Wort zu einer von $T_A$ ausgehenden Hypothese und wenigstens ein zweites Wort zu einer von $T_B$ ausgehenden Hypothese gehört. Das erste Wort, dessen Ende erreicht worden ist, sei mit W1 bezeichnet, und es sei an diesem Ende ein Bewertungswert S1 erreicht. Diese Angaben stehen in einem symbolisch dargestellten Speicherfeld K1, wo die Bewertungswerte für die Suche gespeichert werden. Wie dargestellt, enthält der Speicherplatz K11 den Bewertungswert S1, der Speicherplatz K12 die Wortidentität W1 und der Speicherplatz K13 einen Hinweis $B_{L2}$ auf das schraffierte Feld des Bereichs $T_A$ der Ergebnisliste L. Das Speicherfeld K2 enthält ähnliche Angaben für das Wort W2.

Es muß nun festgestellt werden, welches der Wörter, deren Angaben in dem Bereich $T_A$ gespeichert sind, das optimale Vorgängerwort ist. Allgemein, jedoch nicht immer, wird dies das Wort des Bereichs $T_A$ sein, das den niedrigsten Bewertungswert hat. Die nicht unwahrscheinliche Ausnahme ist, daß dieses Wort in Kombination mit dem nächsten Wort W1 einen großen Sprachmodellwert erhält, der eine geringe Wahrscheinlichkeit für diese Kombination anzeigt. Auf der anderen Seite kann ein Wort des Bereichs $T_A$, das selbst einen höheren Bewertungswert hat, in Kombination mit dem Wort W1 einen niedrigeren Sprachmodellwert erhalten, der eine höhere Wahrscheinlichkeit für diese Kombination angibt. Aufgrund der besonderen Umstände kann daher die eine oder die andere Kombination einen niedrigeren endgültigen Bewertungswert erhalten.

Dafür wird nun zunächst über den Hinweis $B_{L2}$ im Speicherplatz K13 das entsprechende Feld der Ergebnislistes L ausgelesen, dessen Inhalt in Fig. 2 mit L2 angedeutet ist. Im Speicherplatz L21 des Feldes L2 ist der optimale Bewertungswert $S_{opt}$ enthalten. Anschließend werden alle Felder des Bereichs $T_A$ ausgelesen, wobei das Feld L1 beispielsweise näher dargestellt ist, das im Speicherplatz L11 den Bewertungswert S (V') enthält. Das optimale Vorgängerwort $V_{opt}$ des Wortes W1 muß nun folgende Bedingung erfüllen:

$$V_{opt} := \underset{V}{\arg\min}\ [S1 - S_{opt} + S(V) + LM\ (V,W1)]$$

Darin muß der minimale Wert des Ausdrucks in den eckigen Klammern in dem Satz von Wörtern bestimmt werden, die symbolisch mit V angegeben sind. Der erste Wert S1 stellt den Bewertungswert dar, der von dem Start der Erkennung an bis zum Wort W1 erzeugt worden ist. Die Subtraktion von $S_{opt}$ erfolgt aus Gründen der Normalisierung. S(V) ist der Bewertungswert des einzelnen Wortes V selbst. Der letzte Term ist der Sprachmodellwert für die Kombination des Wortes W1 als direkter Nachfolger des betreffenden Wortes V. Bei dem Beispiel in Fig. 2 sei nun angenommen, daß sich das im Feld L1 gespeicherte Wort V' als optimales Vorgängerwort herausstellt. Dann wird ein neuer Bewertungswert $S_n$ für das Ende des Worts W1 auf folgende Weise gebildet:

$S_n = S1 - S_{opt} + S(V') + LM\ (V',W1)$

Dieser neue Bewertungswert war bereits bei der angegebenen Suche nach dem optimalen Vorgängerwort gemäß der ersten Gleichung gebildet worden.

Nun kann der Inhalt des Feldes L3, das hier das erste im Bereich $T_C$ der Ergebnisliste L einzuspeichernde Feld darstellt, bestimmt werden. Der neue Bewertungswert $S_n$ wird im Platz L31 des Speicherfeldes L3 eingetragen, die Wortidentität W1 wird direkt in den Speicherplatz L32 übernommen, und als Hinweis auf das Vorgängerwort wird in den Platz L33 der Hinweis $B_{L1}$ auf das Feld L1 im Bereich $T_A$ eingetragen, in dem das optimale Vorgängerwort V' enthalten ist. Auf diese Weise wird, wenn nach dem Ende des Sprachsignals bei der Zurückverfolgung der optimalen Wortkette das erste Feld im Bereich $T_C$ der Ergebnisliste L aufgerufen werden sollte, direkt das Feld L1 des Vorgängerworts gefunden, das einen entsprechenden Hinweis auf das davorliegende Vorgängerwort enthält, usw., so daß die richtige Wortfolge direkt eindeutig gefunden wird.

Auf entsprechende Weise werden in Fig. 2 zu dem weiteren endenden Wort W2, bei dem die in dem Feld K2 angegebenen Werte entstehen, die in das zweite Feld des Bereichs $T_C$ der Ergebnisliste L einzuschreibenden Werte gefunden. Der in dem Feld K23 enthaltene Hinweis $B_{LX}$ adressiert dabei das schraffierte Feld des Bereichs $T_B$ für das Wort mit dem kleinsten Bewertungswert dieses Bereichs, und aus dem Bewertungswert S2 im Feld K21 für das Wort W2 wird ein neuer Bewertungswert S' in entsprechender Weise wie vorher beschrieben aus dem optimalen Vorgängerwort ermittelt und in dem Platz L41 des Feldes L4 eingetragen, das im Feld L43 den Hinweis $B_{LY}$ auf das Feld des optimalen Vorgängerwortes im Bereich $T_b$ erhält.

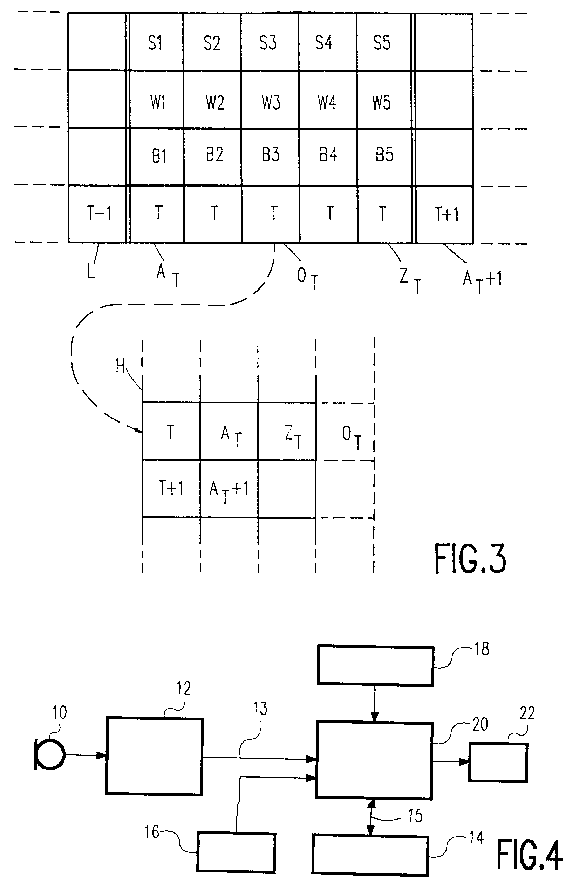

Bei dem Beispiel nach Fig. 2 wurde angenommen, daß als Hinweis auf den Anfang einer Folge die Adresse des Listenplatzes der Ergebnisliste L, die die Angaben für das Wort mit dem kleinsten Bewertungswert bei dem dem Anfang unmittelbar vorhergehenden Zeitpunkt enthält, mitgeführt wird und daß die anderen Felder der Ergebnisliste L, die zu diesem Zeitpunkt gehören, ausgelesen werden. Die Bestimmung dieser Listenplätze kann auf verschiedene Weise erfolgen, und auch für den mitgeführten Hinweis auf den Anfang einer Folge bestehen verschiedene Möglichkeiten, wie nachfolgend anhand der Fig. 3 erläutert werden soll.

In Fig. 3 ist ein Ausschnitt der symbolisch dargestellten Ergebnisliste L näher angegeben. Jedes Feld, d.h. jeder Listenplatz, enthält mehrere Plätze, wie in Fig. 2 angedeutet ist. In Fig. 3 ist jedoch jedes Feld mit vier Plätzen angegeben ist. Von den mittleren fünf Feldern, die gemeinsam die Angaben zu einem bestimmten Zeitpunkt T, d.h. zu einem bestimmten Testsignal enthalten, wie in den untersten Plätzen dieser fühf Felder angegeben ist, enthalten die nächsten Plätze darüber Hinweise B1 bis B5 auf die Anfänge der Wörter W1 bis W5, die in den Plätzen darüber angegeben sind, bzw. genauer auf die Anfänge der zu diesen Wörtern gehörenden Folgen oder auf die unmittelbar davor endenden Folgen, während in den obersten Plätzen die Bewertungswerte S1 bis S5, die an den Enden der Wörter W1 bis W5 erreicht worden sind, oder davon abgeleitete Folgenwerte enthalten sind. Das am weitesten links dargestellte Feld ist das letzte einer Reihe von Feldern, die zum vorhergehenden Zeitpunkt T-1 gehören, und das ganz rechts dargestellte Feld gehört zum folgenden Zeitpunkt T + 1.

Ausgehend von Fig. 2 und der zugehörigen Erläuterung wird zunächst angenommen, daß als Hinweis auf den Anfang einer Folge die Adresse des Listenplatzes mitgeführt wird, in dem die Angaben des Wortes mit dem kleinsten Bewertungswert unmittelbar vor den Anfang der neuen Folge enthalten sind. Dies möge in Fig. 3 der mittlere Listenplatz sein, d.h. das Feld, das mit $O_T$ bezeichnet ist. Dann entspricht der darin angegebene Bewertungswert S3 dem optimalen Bewertungswert $S_{opt}$, wie in Fig. 2 angegeben ist. Aus diesem Feld $O_T$ wird andererseits aus dem untersten Platz der Zeitindex T entnommen, mit dem ein entsprechend bezeichneter Speicherplatz einer Hilfsliste H adressiert wird. In dieser Hilfsliste ist zum Index T die Adresse $A_T$ des ersten Listenplatzes der Ergebnisliste L, der zum Zeitpunkt T gehört, angegeben. Ferner ist die Adresse des letzten Listenplatzes $Z_T$ des zum Zeitpunkt T gehörenden Bereiches angegeben. Über diese Hilfsliste können damit also alle fünf Listenplätze eindeutig adressiert werden.

Alternativ kann auch nur einer dieser Listenplätze angegeben sein, beispielsweise der Listenplatz AT, da der letzte Listenplatz dadurch ermittelt werden kann, daß er unmittelbar vor dem Listenplatz $A_{T+1}$ liegt, der an dem folgenden Listenplatz T + 1 der Hilfsliste H enthalten ist.

Eine andere Möglichkeit, bei der die Verwendung der Hilfsliste H nicht erforderlich ist, besteht auch darin, daß nach dem Zugriff auf den Listenplatz $O_T$ der Ergebnisliste L die benachbarten Listenplätze so lange ausgelesen werden, bis ein Listenplatz auftaucht, der im letzten Feld einen anderen Zeitindex enthält. Auch auf diese Weise können dann alle Listenplätze, die zum Zeitpunkt T gehören, ermittelt werden.

Noch eine andere Möglichkeit besteht darin, als Hinweis auf den Anfang einer Folge nicht die Adresse eines Listenplatzes der Ergebnisliste, sondern den Zeitindex des dem Anfang unmittelbar vorhergehenden Zeitpunktes mitzuführen. Dann würde in Fig. 2 beispielsweise das Feld K13 direkt einen Zeitindex enthalten. Damit kann der entsprechende Listenplatz der Hilfsliste H direkt aufgesucht werden, aus dem dann die Listenplätze der Ergebnisliste L hervorgehen, die nacheinander auszulesen sind. In diesem Falle können die in Fig. 3 dargestellten untersten Plätze der Ergebnisliste L, die den Zeitindex enthalten, eingespart werden. Um den Listenplatz mit dem kleinsten Bewertungswert, der für die Suche nach dem optimalen Vorgängerwort notwendig ist, aufzufinden, können die Bewertungswerte aller Listenplätze von $A_T$ bis $Z_T$ miteinander verglichen werden. Es ist auch möglich, in der Hilfsliste den Listenplatz $O_T$, der dem Wort mit dem kleinsten Bewertungswert zugeordnet ist, direkt zu speichern, wie in der Hilfsliste H rechts gestrichelt angedeutet ist.

Schließlich ist es auch möglich, wenn als Hinweis auf den Anfang einer Folge der Zeitindex mitgeführt wird, in der Ergebnisliste L an den ersten Plätzen nicht die Bewertungswerte selbst, sondern die Differenzen zum optimalen Bewertungswert zu speichern. In diesem Falle ist die Kenntnis des Listenplatzes der Ergebnisliste L, in der der optimale Bewertungswert enthalten ist, nicht erforderlich. Statt dessen ist für die Ermittlung des optimalen Vorgängerwortes und für den dazugehörigen neuen Bewertungswert Sn eine leicht modifizierte Gleichung maßgebend:

$$S_n = S1 + \Delta S(V') + LM (V',W1)$$

Dabei bedeutet $\Delta S(V')$ die Differenz des Bewertungswertes des Wortes V' zum kleinsten Bewertungswert aller Wörter, die zum selben Zeitpunkt beendet werden. Dies führt sogar zu weniger Berechnungen bei der Ermittlung des optimalen Vorgängerworts dar, dem jedoch ein zusätzlicher Rechenaufwand für die Bestimmung der Differenzen der Bewertungswerte, die nun als Folgenwert an den jeweils ersten Plätzen der Felder der Ergebnisliste L abgespeichert werden, gegenübersteht.

Es ist also zu erkennen, daß für die Bestimmung der Felder der Ergebnisliste, die für die Ermittlung des optimalen Vorgängerworts ausgelesen werden müssen, eine Vielzahl verschiedener Möglichkeiten besteht.

Die vorstehend beschriebenen Maßnahmen sind auch günstig anwendbar, wenn nicht nur die wahrscheinlichste Wortfolge, die also die größte Ähnlichkeit mit dem Sprachsignal hat, ermittelt werden soll, sondern wenn mehrere Wortfolgen mit nächst geringerer Wahrscheinlichkeit ermittelt werden sollen, wie dies in der DE-OS 39 30 889 beschrieben ist.

Fig. 4 zeigt ein vereinfachtes Blockschaltbild einer Anordnung zur Spracherkennung.

In Fig. 4 wird das über das Mikrofon 10 aufgenommene Sprachsignal in einer Anordnung 12 vorverarbeitet, insbesondere werden für aufeinanderfolgende Sprachsignalabschnitte die spektralen Anteile in digitaler Form ermittelt, wobei die Gesamtheit der jeweils einen Sprachsignalabschnitt darstellenden Werte ein Testsignal darstellt. Diese Testsignale, die auf der Verbindung 13 auftreten, werden der Erkennungsanordnung 20 zugeführt. Diese Erkennungsanordnung erzeugt die verschiedenen Hypothesen, wobei die im Speicher 16 enthaltenen Referenzsignale verwendet werden. Am Ende des Sprachsignals wird von der Anordnung 20 die Folge der erkannten Wörter einer Ausgabeanordnung 22, z.B. einer Anzeigeanordnung oder einem Drucker, zugeführt.

Die Anordnung 20 für die eigentliche Erkennung kann beispielsweise gemäß der DE-OS 37 10 507 aufgebaut sein. Bei dieser werden während der Suche, d.h. während der Verarbeitung der aufeinanderfolgenden Testsignale, eine Vielzahl von Hypothesen in einem aus den Testsignalen und den Referenzsignalen gebildeten Suchraum aufgebaut, wobei Hypothesen mit einem ungünstigen Bewertungswert, der einen Schwellwert überschreitet, abgebrochen werden, und wenn jeweils ein mögliches Wortende erreicht wird, erfolgt eine Verzweigung auf eine Anzahl weiterführender Hypothesen durch jeweils neu zu beginnende Wörter, die vorzugsweise nach einem Sprachmodell bestimmt werden. Allgemein ist die Verwendung eines derartigen Suchraums beschrieben in einem Aufsatz von H. Ney et al., "A data driven organization of the dynamic programming beam search for continuous speech recognition"; 1987, IEEE, No. CH 2396-0/87/0000/0633.

Während der Suche werden Zwischenergebnisse in einen Ergebnisspeicher 14 geschrieben. Zwischenergebnisse sind in diesem Beispiel alle Wörter, deren Ende während der Suche erreicht wird, zusammen mit den zugeordneten Bewertungswerten und den Hinweisen auf die jeweiligen Vorgängerwörter. Die Fortsetzungen während der Suche basieren auf der Auswahl von einem oder mehreren minimalen Bewertungswerten. Die weiteren Bewertungswerte für nachfolgend endende Wörter während der Fortsetzung der Suche werden unter Verwendung der vorhergehenden Bewertungswerte bestimmt, die aus dem Ergebnisspeicher 14 ausgelesen und der Anordnung 20 zugeführt werden müssen. Die Verbindung 15 zwischen dem Ergebnisspeicher 14 und der Anordnung 20 ist daher bidirektional. Die weiteren Bewertungswerte aus den Bewertungswerten der endenden Wörter selbst und den aus dem Ergebnisspeicher 14 ausgelesenen Bewertungswerten bestimmt, erhöht um den Sprachmodellwert aus einem Speicher 18 für die Kombination des endenden Wortes und der Kette der letzten vorhergehenden Wörter. Diese Kette umfaßt ein Wort (Bigram), zwei Wörter (Trigram), und so weiter. Am Ende des Sprachsignals bestimmt die Anordnung 20 die Folge von Wörtern, die die höchste Wahrscheinlichkeit haben, auf der Basis des minimalen Gesamt-Bewertungswertes über den Ergebnisspeicher.

**Patentansprüche**

1. Verfahren zum Erkennen einer Folge von Wörtern in einem Sprachsignal mit folgenden Schritten:
   - Zu wiederholten Zeitpunkten wird das Sprachsignal abgetastet, um eine Folge von Testsignalen zu erzeugen, und es wird ein signalweiser Vergleich mit Bewertung zwischen den Testsignalen und verschiedenen Folgen von Referenzsignalen durchgeführt, die zu einem Satz von Folgen von Referenzsignalen gehören, wobei jede Folge von Referenzsignalen ein Wort des Vokabulars darstellt;
   - zu einem bestimmten ersten Testsignal wird jeder ersten Folge von vorläufig erkannten Wörtern, die bei diesem ersten Testsignal endet, ein erster Bewertungswert zugeordnet;
   - von einem bestimmten zweiten Testsignal an, das dem ersten Testsignal folgt, wird der signalweise Vergleich mit Bewertung für geeignete weitere Folgen von Referenzsignalen aus dem oben genannten Satz fortgesetzt, bis das Ende eines folgenden Wortes bei einem weiteren ersten Testsignal erreicht ist, wobei jede solche folgende Folge, die dieses folgende Wort darstellt, einen Teilbewertungswert erzeugt;
   - für jede solche folgende Folge wird ein n-Gram Sprachmodellwert (n≧2) zugeführt, der durch die kombinierten Wortidentitäten des folgenden Wortes und von (n-1) letzten Wörtern des Vokabulars aus der Folge der vorläufig erkannten Wörter, die bei dem ersten Testsignal enden, bestimmt ist;
   - der erste Bewertungswert, der Teilbewertungswert und der Sprachmodellwert werden addiert, um einen weiteren ersten Bewertungswert zu erzeugen, wobei ein Hinweis auf diesen weiteren ersten Bewertungswert, ein Hinweis auf das folgende Wort und ein Hinweis auf das genannte erste Testsignal in einem Bereich einer Ergebnisliste gespeichert wird, der diesem weiteren ersten Testsignal zugeordnet ist;
   - die minimalen gleichzeitig vorhandenen ersten Bewertungswerte werden ausgewählt, um damit zugeordnete Wortfolgen vorläufig zu erkennen, wobei die anderen Folgen beendet werden;
   - die erkannte Folge von Wörtern wird dargestellt durch eine nicht beendete erste Folge mit einem zugeordneten minimalen Wert unter den verschiedenen ersten Bewertungswerten in der Ergebnisliste.

2. Verfahren nach Anspruch 1,
   **dadurch gekennzeichnet**, daß eine Angabe jedes Bereichs der Ergebnisliste in einer gesonderten Listenposition einer Hilfsliste für jedes Testsignal gespeichert wird.

3. Verfahren nach Anspruch 1 oder 2,
   **dadurch gekennzeichnet**, daß mit jedem weiteren ersten Bewertungswert ein Hinweis auf das weitere erste Testsignal in der Ergebnisliste gespeichert wird.

4. Verfahren nach einem der Ansprüche 1, 2 oder 3,
   **dadurch gekennzeichnet**, daß eine Listenposition innerhalb des Bereichs der Ergebnisliste, in der ein Hinweis auf die minimale weitere Bewertung gespeichert ist, während der Fortsetzung des Vergleichs mit Bewertung als Hinweis auf das erste Testsignal mitgeführt wird.

5. Verfahren nach Anspruch 2 oder 3,
   **dadurch gekennzeichnet**, daß die Listenposition der Hilfsliste, die dem weiteren ersten Testsignal zugeordnet ist, als Hinweis auf das erste Testsignal mitgeführt wird.

6. Verfahren nach Anspruch 5,
   **dadurch gekennzeichnet**, daß zum Bestimmen des Teilbewertungswertes der minimale erste Bewertungswert von dem Bewertungswert am Ende des betreffenden folgenden Wortes subtrahiert wird.

7. Verfahren nach Anspruch 5,
   **dadurch gekennzeichnet**, daß der Hinweis auf den weiteren ersten Bewertungswert die Differenz zwischen dem Bewertungswert am Ende des betreffenden Wortes und dem minimalen Bewertungswert aller endenden Wörter bei dem weiteren ersten Testsignal ist, und daß jeder weitere erste Bewertungswert aus der Summe des Bewertungswertes am Ende einer Folge, aus dem ersten Bewertungswert und aus dem betreffenden Sprachmodellwert gebildet wird.

8. Anordnung zur Durchführung des Verfahrens nach einem der Ansprüche 1 bis 7, die folgendes enthält:

7

- Eingabemittel zum Empfangen eines Sprachsignals;
- von diesen Eingabemitteln gespeiste Abtastmittel zum Abtasten des Sprachsignals zu wiederholten Zeitpunkten und zum Erzeugen eines Testsignals bei jedem Zeitpunkt;
- Vergleichs- und Bewertungsmittel, die von den Abtastmitteln gespeist werden und erste Speichermittel zum Speichern eines Satzes von Folgen von Referenzsignalen, wobei jede solche Folge ein Vokabularwort darstellt, und zweite Speichermittel zum Speichern eines Satzes von n-Gram ($n \geqq 2$) Sprachmodellwerten aufweisen, wobei jeder Wert zu einer Teilfolge der n letzten Vokabularwörter gehört;
- erste Bewertungsmittel, die von den Vergleichs- und Bewertungsmitteln gespeist werden, um bei einem bestimmten ersten Testsignal jeder Folge von vorläufig erkannten Wörtern, die bei diesem ersten Testsignal endet, einen ersten Bewertungswert zuzuordnen;
- zweite Bewertungsmittel, die von den ersten Bewertungsmitteln und von den zweiten Speichermitteln gespeist werden, um jeden ersten Bewertungswert durch den entsprechenden Sprachmodellwert zu erhöhen, der zu den n zuletzt erkannten Vokabularwörtern der Folge gehört;
- weitere Speichermittel zum Speichern der erhöhten Bewertungswerte und der zugeordneten Wörter und Hinweise;
- Auswahlmittel, die von den ersten Speichermitteln gespeist werden, zum Auswählen der Folgen mit minimalen Bewertungswerten unter den gleichzeitig vorhandenen Werten, die durch die ersten und zweiten Bewertungsmittel zugeordnet bzw. erhöht worden sind;
- Ausgabemittel, die von den Auswahlmitteln gespeist sind, um eine ausgewählte Folge mit absoluten minimalen Bewertungswerten für weitere Verwendung auszugeben.

FIG.1

FIG.2

$S_n = S1 - S_{opt} + S(V') + LM(V', W1)$

FIG.3

FIG.4